Europäisches Patentamt

European Patent Office

Office européen des brevets

(19)

(11) Veröffentlichungsnummer: **0 175 177 B1**

(12) **EUROPÄISCHE PATENTSCHRIFT**

(45) Veröffentlichungstag der Patentschrift:
29.11.89

(21) Anmeldenummer: 85110733.4

(22) Anmeldetag: 27.08.85

(51) Int. Cl.⁴: **B23D 23/00**

(54) **Profilstahlschere.**

(30) Priorität: 05.09.84 DE 3432546

(43) Veröffentlichungstag der Anmeldung:
26.03.86 Patentblatt 86/13

(45) Bekanntmachung des Hinweises auf die Patenterteilung:
29.11.89 Patentblatt 89/48

(84) Benannte Vertragsstaaten:
AT BE CH DE FR GB IT LI LU NL SE

(56) Entgegenhaltungen:
DE-A- 1 652 767
DE-A- 2 838 733
DE-A- 3 038 817
DE-C- 53 785
DE-C- 802 675
US-A- 3 391 591

(73) Patentinhaber: Firma Muhr und Bender, Kölner Strasse 99, D-5952 Attendorn(DE)

(72) Erfinder: Muhr, Richard, Kölner Strasse 64, D-5952 Attendorn(DE)
Erfinder: Schröder, Werner, Auf dem Hahne 5, D-5950 Finnentrop 1(DE)

(74) Vertreter: Gesthuysen, Hans Dieter, Dipl.-Ing. et al, Patentanwälte Gesthuysen + von Rohr Huyssenallee 15 Postfach 10 13 33, D-4300 Essen 1(DE)

**Beschreibung**

Die Erfindung betrifft eine Profilstahlschere mit einem Maschinenkörper mit einer vorderen Körperplatte und einer hinteren Körperplatte, mit einem an der vorderen Körperplatte angeordneten feststehenden Messer, mit einem im Zwischenraum zwischen den Körperplatten im wesentlichen vertikal bewegbar geführten Arbeitsschlitten und mit einem zwischen den Körperplatten in einem Winkel von vorzugsweise 45° zur Vertikalen geführten, durch den Arbeitsschlitten bewegbaren, in der Ebene des Arbeitsschlittens angeordneten Messerschlitten mit einem bewegbaren Messer, wobei die Führung des Messerschlittens und Umlenkung der im wesentlichen vertikal gerichteten Bewegung des Arbeitsschlittens in die in einem Winkel von vorzugsweise 45° zur Vertikalen gerichtete Bewegung des Messerschlittens über Gleit- und Führungsflächen erfolgt und wobei die Gleit- und Führungsflächen an gesonderten, an den Körperplatten abgestützten, sich von der vorderen Körperplatte bis zur hinteren Körperplatte über den Zwischenraum hinweg erstreckenden Führungsleisten ausgebildet sind.

Bei der bekannten Profilstahlschere, von der die Erfindung ausgeht (US-A-3 391 591), läßt sich beispielsweise ein L-förmiger Profilstahlstab mit einem horizontal liegenden L-Schenkel in das Scherenmaul einführen, da ein in einem Winkel von 45° zur Vertikalen geführter, durch den Arbeitsschlitten bewegbarer Messerschlitten vorgesehen ist. Diese Konstruktion der bekannten Profilstahlschere macht das Einführen und richtige Anstellen des Profilstahlstabes beispielsweise für einen Gehrungsschnitt besonders einfach, erfordert aber eine Umlenkung der im wesentlichen vertikal gerichteten Bewegung des Arbeitsschlittens in die in einem Winkel von 45° dazu gerichtete Bewegung des Messerschlittens. Die Umlenkung erfolgt an Gleit- und Führungsflächen, die an gesonderten, an den Körperplatten abgestützten und sich von der vorderen Körperplatte bis zur hinteren Körperplatte über den Zwischenraum hinweg erstreckenden Führungsleisten ausgebildet sind. Die Ausbildung der Gleit- und Führungsflächen an gesonderten Führungsleisten hat dabei den Vorteil, daß keine Rücksichtnahme auf für die Körperplatten geltende konstruktive Vorgaben notwendig sind, so daß schon materialmäßig und von der Bearbeitung her bei den Führungsleisten optimale Voraussetzungen für die Gleit- und Führungsflächen geschaffen werden können.

Die Anordnung der Führungsleisten im Zwischenraum zwischen den beiden Körperplatten erlaubt es, daß der Messerschlitten in der Ebene des Arbeitsschlittens angeordnet ist. Dadurch sind Kraftübertragungsflächen am Arbeitsschlitten und am Messerschlitten, die der Übertragung der Scherkräfte vom Arbeitsschlitten auf den Messerschlitten dienen und in einem Winkel zur Vertikalen angeordnet sind, der dem Winkel der Bewegungsrichtung des Messerschlittens entspricht, mit der größtmöglichen Fläche optimal gestaltet. Zweckmäßig ist bei der bekannten Profilstahlschere schließlich, daß benachbart zu den Kraftübertragungsflächen am Arbeitsschlitten Rückholzapfen angeordnet sind, die in eine am Messerschlitten angeordnete, quer zur Bewegungsrichtung des Messerschlittens verlaufende Rückholnut eingreifen, so daß der Messerschlitten beim Rückhub des Arbeitsschlittens nach erfolgtem Schnitt mitgenommen wird.

Bei der bekannten, zuvor erläuterten Profilstahlschere ist das als Messerplatte ausgeführte feststehende Messer in einer paßgenau bemessenen Messerplattenausnehmung in der vorderen Körperplatte angeordnet. Dort, wo die Führungsleisten im Zwischenraum zwischen den Körperplatten angeordnet sind, ist die Breite der Messerplattenausnehmung in der vorderen Körperplatte größer als die Breite des Scherenmauls in der hinteren Körperplatte. Das feststehende Messer weist an den Rändern Durchgangsbohrungen auf, die mit Gewindebohrungen in der hinteren Körperplatte fluchten. Die Führungsleisten weisen gleichfalls Durchgangsbohrungen auf, sind mit diesen Durchgangsbohrungen mit den zuvor genannten Durchgangsbohrungen bzw. Gewindebohrungen fluchtend im Zwischenraum zwischen den Körperplatten angeordnet und über durchgesteckte und eingeschraubte Gewindebolzen zwischen dem feststehenden Messer und der hinteren Körperplatte verspannt. Das feststehende Messer seinerseits ist über umlaufende Kraftübertragungsflächen in der vorderen Körperplatte gelagert, so daß an den Führungsleisten in der Ebene des Messerschlittens angreifende Kräfte großflächig vom feststehenden Messer in die vordere Körperplatte abgeleitet werden.

Sogenannte Kaulkräfte, also Kräfte senkrecht zur Richtung der eigentlichen Scherkräfte, werden bei der zuvor erläuterten Konstruktion am feststehenden Messer abgefangen und über die Schraubverbindungen in die vordere Körperplatte abgeleitet. Nur die vordere Körperplatte muß also diesen Kräften senkrecht zur Richtung der eigentlichen Scherkräfte entsprechend massiv ausgebildet sein. Nicht optimal ist bei dieser Konstruktion allerdings, daß alle an den Führungsleisten in der Ebene des Messerschlittens angreifenden Kräfte über die Führungsleisten an den Körperplatten haltenden Schraubverbindungen in die Körperplatten abgeleitet werden. Diese Schraubverbindungen sind nämlich dadurch sehr stark auf Scherung beansprucht, häufige Brüche der Gewindebolzen bzw. Befestigungsschrauben sind die Folge. Außerdem ist nicht optimal, daß das feststehende Messer für alle Auswechselarbeiten aus der vorderen Körperplatte herausgenommen werden muß, selbst wenn man nur die Führungsleisten auswechseln möchte.

Ausgehend von dem zuvor erläuterten Stand der Technik liegt der Erfindung die Aufgabe zugrunde, die bekannte Profilstahlschere möglichst praxisgerecht auszugestalten, insbesondere eine möglichst praxisgerechte Handhabung und geringstmöglichen Verschleiß zu gewährleisten.

Die erfindungsgemäße Profilstahlschere, bei der die zuvor aufgezeigte Aufgabe gelöst ist, ist dadurch gekennzeichnet, daß die vordere Körperplatte, angrenzend an das feststehende Messer, nach vorne geschlossene Aufnahmeausnehmungen für die Führungsleisten aufweist, daß die Führungsleisten von der hinteren Körperplatte her in die Aufnahmeausnehmungen der vorderen Körperplatte einsetzbar oder einlegbar sind, daß die Führungsleisten fest mit der vorderen Körperplatte verbunden sind und daß die Führungsleisten mit Abstand vom feststehenden Messer angeordnete, zu den Gleit- und Führungsflächen parallele, aufeinander zu gerichtete Haltevorsprünge für den Messerschlitten aufweisen. Erfindungsgemäß werden die Führungsleisten von der hinteren Körperplatte her bis in die Aufnahmeausnehmungen der vorderen Körperplatte eingesetzt bzw. eingelegt; anders als beim Stand der Technik, von dem die Erfindung ausgeht, ist das Scherenmaul der hinteren Körperplatte hier also breiter als die Messerplattenausnehmung für das feststehende Messer in der vorderen Körperplatte. Durch die an der vorderen Körperplatte vorgesehenen Aufnahmeausnehmungen werden die Führungsleisten hier in der Ebene der vorderen Körperplatte an dieser selbst abgestützt. Im übrigen sind die Führungsleisten in gleicher Weise in der Ebene der hinteren Körperplatte an dieser abgestützt. Alle an den Führungsleisten in der Ebene des Messerschlittens angreifenden Kräfte werden also nur über die Führungsleisten selbst, nämlich über entsprechend aneinander zur Anlage kommende Kraftübertragungsflächen an den Führungsleisten und den Aufnahmeausnehmungen, in die Körperplatten abgeleitet. Für diese Ableitung der an den Führungsleisten angreifenden Kräfte sind an sich keine Schraubverbindungen notwendig. Mit dieser Konstruktion ist ein beim Stand der Technik systematisch vorhandenes Verschleißproblem eliminiert worden, sind nämlich stark auf Scherung beanspruchte Gewindebolzen oder Befestigungsschrauben nicht mehr vorhanden. Sofern überhaupt Schraubverbindungen vorhanden sind, sind diese nicht stark auf Scherung beansprucht. Auf Scherung beansprucht sind nur die Führungsleisten selbst, die aber ausreichend stark dimensioniert werden können, um allen Beanspruchungen standzuhalten.

Ein weiterer Vorteil der erfindungsgemäßen Profilstahlschere besteht darin, daß das feststehende Messer und das bewegliche Messer einzeln eingebaut und ausgebaut werden können, und zwar sowohl von der Vorderseite als auch von der Rückseite her. Im übrigen ist festzuhalten, daß die Lehre der Erfindung auch zu verwirklichen ist, wenn das feststehende Messer an der hinteren Körperplatte angeordnet ist und/oder wenn die Führungsleisten von der vorderen Körperplatte her in nach hinten geschlossene Aufnahmeausnehmungen der hinteren Körperplatte einsetzbar oder einlegbar sind. Wesentlich ist lediglich, daß die Führungsleisten sich vollständig über den Zwischenraum hinweg erstrecken und in den Ebenen der Körperplatten an diesen zum Zwecke einer unmittelbaren Kraftübertragung zur Anlage kommen.

Im einzelnen gibt es verschiedene Möglichkeiten, die erfindungsgemäße Profilstahlschere auszugestalten und weiterzubilden. Das wird im folgenden in Verbindung mit einer Zeichnung näher erläutert. Es zeigt

Fig. 1 ausschnittweise, sehr stark schematisiert, ein Ausführungsbeispiel einer Profilstahlschere und

Fig. 2 einen Schnitt durch den Gegenstand aus Fig. 1 entlang der Linie II–II.

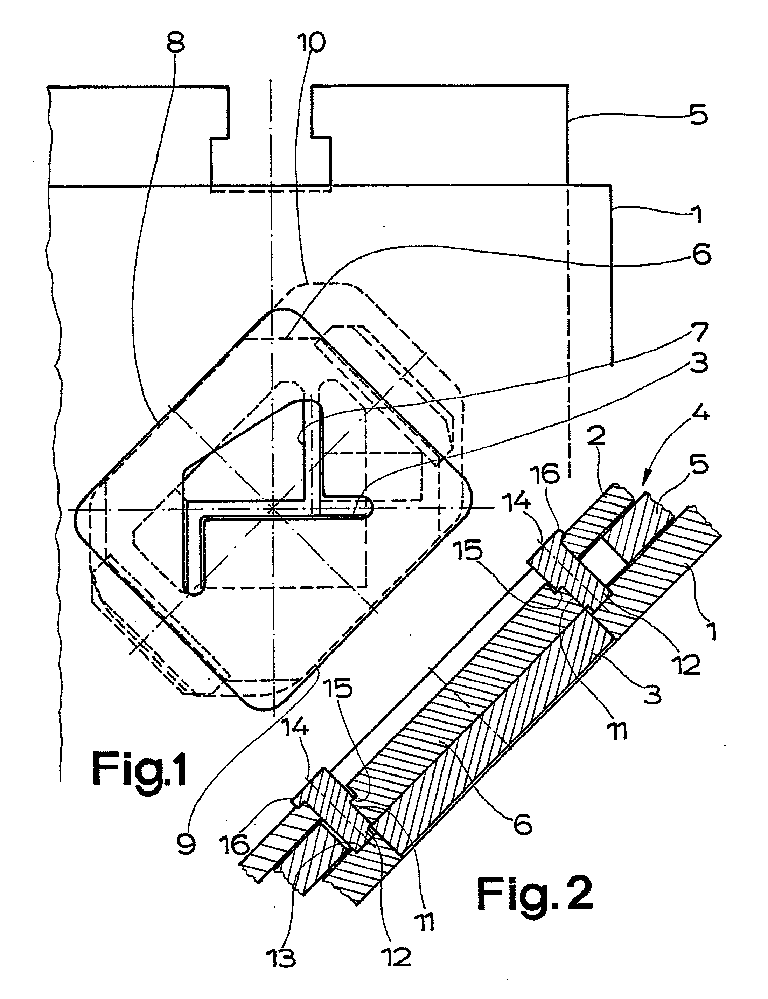

Die Fig. 1 und 2 lassen zunächst im Zusammenhang erkennen, daß die hier dargestellte Profilstahlschere einen Maschinenkörper mit einer vorderen Körperplatte 1 und einer hinteren Körperplatte 2, ein an der vorderen Körperplatte 1 fest angeordnetes feststehendes Messer 3, einen im Zwischenraum 4 zwischen den Körperplatten 1, 2 vertikal bewegbar geführten Arbeitsschlitten 5 und einen zwischen den Körperplatten 1, 2 in einem Winkel von 45° zur Vertikalen geführten, durch den Arbeitsschlitten 5 bewegbaren Messerschlitten 6 mit einem beweglichen Messer 7 aufweist. In Fig. 1 ist zu erkennen, daß zur Übertragung der Scherkräfte vom Arbeitsschlitten 5 auf den Messerschlitten 6 Kraftübertragungsflächen 8 am Arbeitsschlitten 5 und am Messerschlitten 6 ausgebildet sind. Entsprechende Rückhol-Kraftübertragungsflächen 9 sind gleichfalls in Fig. 1 eingezeichnet. Die Kraftübertragungsflächen 8, 9 am Arbeitsschlitten 5 sind an einer Ausnehmung 10 ausgebildet, die quer zur Bewegungsrichtung des Messerschlittens 6 erheblich größere Abmessungen als der Messerschlitten 6 aufweist. Auf diese Weise ist quer zur Bewegungsrichtung des Messerschlittens 6 eine Relativbewegung zwischen Arbeitsschlitten 5 und Messerschlitten 6 möglich.

Die Führung des Messerschlittens 6 und die Umlenkung der im wesentlichen vertikal gerichteten Bewegung des Arbeitsschlittens 5 in die in einem Winkel von 45° zur Vertikalen gerichtete Bewegung des Messerschlittens 6 erfolgt über Gleit- und Führungsflächen 11, die in Fig. 2 zu erkennen sind. Die Gleit- und Führungsflächen 11 sind im dargestellten Ausführungsbeispiel an gesonderten, an den Körperplatten 1, 2 abgestützten Führungsleisten 12 ausgebildet. Die Führungsleisten 12 können nach Material und Bearbeitungsweise bezüglich der Gleit- und Führungsflächen 11 optimal funktionsgerecht ausgestaltet werden. Beschränkungen hinsichtlich der Auswahl des Materials wie bei den Körperplatten 1, 2 sind hier nicht gegeben.

Das Vorhandensein von Führungsleisten 12 gibt die Möglichkeit, den Messerschlitten 6 in der Ebene des Arbeitsschlittens 5 anzuordnen. Damit steht für die Kraftübertragungsflächen 8, 9 die volle Dicke sowohl des Arbeitsschlittens 5 als auch des Messerschlittens 6 zur Verfügung, die Kraftübertragung vom Arbeitsschlitten 5 auf den Messerschlitten 6 ist optimiert.

Die Führungsleisten 12 bestehen im dargestellten Ausführungsbeispiel aus einem Material mit besonders guten Gleiteigenschaften, hier aus einem graphithaltigen Material. Im übrigen ist die Materialauswahl für die Führungsleisten 12 dadurch bestimmt, daß die auftretenden erheblichen Kräfte abgefangen werden müssen. Außerdem weisen die Führungsleisten 12 besonders gute Oberflächeneigenschaften auf.

Die Figuren zeigen, daß die Führungsleisten 12 sich von der vorderen Körperplatte 1 bis zur hinteren Körperplatte 2 über den Zwischenraum hinweg erstrecken. Dieser Konstruktion tragen natürlich auch die Abmessungen der Ausnehmung 10 im Arbeitsschlitten 5 Rechnung. Fig. 2 zeigt, wie die Führungsleisten 12 sich brückenartig über den Zwischenraum 4 hinweg erstrecken und sich senkrecht zur Bewegungsrichtung des Messerschlittens 6 voll an den Körperplatten 1, 2 abstützen.

Im Stand der Technik ist nicht optimal, daß alle an den Führungsleisten in der Ebene des Messerschlittens angreifenden Kräfte über die die Führungsleisten an den Körperplatten haltenden Schraubverbindungen in die Körperplatten abgeleitet werden. Die Schraubverbindungen sind also stark auf Scherung beansprucht, häufige Brüche von Gewindebolzen bzw. Befestigungsschrauben sind die Folge. Außerdem ist nicht optimal, daß das feststehende Messer für alle Auswechselarbeiten aus der vorderen Körperplatte herausgenommen werden muß. Aus diesen Gründen ist bei der dargestellten Profilstahlschere die vordere Körperplatte 1 mit nach vorne geschlossenen Aufnahmeausnehmungen 13 für die Führungsleisten 12 versehen. Das dargestellte Ausführungsbeispiel ist insoweit besonders bevorzugt, als die Aufnahmeausnehmungen 13 unmittelbar angrenzend an das feststehende Messer 3 angeordnet sind. Die Führungsleisten 12 können hier von der hinteren Körperplatte 2 her in die Aufnahmeausnehmungen 13 der vorderen Körperplatte 1 eingesetzt bzw. eingelegt werden. Dadurch liegen also die Führungsleisten 12 über entsprechende Kraftübertragungsflächen in den Ebenen der Körperplatten 1 und 2 an diesen an, so daß in der Ebene des Messerschlittens 6 angreifende Kräfte über die Führungsleisten 12 unmittelbar in die Körperplatten 1, 2 abgeleitet werden. Damit werden auftretende Scherkräfte durch die Führungsleisten 12 selbst aufgenommen. Dadurch, daß die Führungsleisten 12 von der hinteren Körperplatte 2 her in die Aufnahmeausnehmungen 13 der vorderen Körperplatte 1 eingesetzt bzw. eingelegt sind, können die Führungsleisten 12 eingesetzt werden, ohne daß das feststehende Messer 3 von der ersten Körperplatte 1 gelöst werden muß. Das ist ein weiterer erheblicher Vorteil der dargestellten Konstruktion.

Zuvor ist schon gesagt worden, daß die Führungsleisten 12 mit einer der Körperplatten 1, 2 fest verbunden sind. Das dargestellte Ausführungsbeispiel zeigt insoweit eine besonders bevorzugte Ausführungsform, als hier die Führungsleisten 12 über Schraubverbindungen 14 mit der vorderen Körperplatte 1 verbunden sind. Im dargestellten Ausführungsbeispiel werden also die Führungsleisten 12 von der hinteren Körperplatte 2 her gewissermaßen an die vordere Körperplatte 1 angesetzt und dort festgeschraubt. Die Schraubverbindungen 14 sind in Fig. 2 nur angedeutet.

Fig. 2 zeigt, daß bei der dargestellten Profilstahlschere die Führungsleisten 12 mit Abstand vom feststehenden Messer 3 angeordnete, zu den Gleit- und Führungsflächen 11 parallele, aufeinander zu gerichtete Haltevorsprünge 15 für den Messerschlitten 6 aufweisen. Im dargestellten Ausführungsbeispiel kommen die leistenartigen Haltevorsprünge 15 mit entsprechenden leistenartigen Ausnehmungen am Messerschlitten 6 in Eingriff, die jedoch nicht durch ein gesondertes Bezugszeichen gekennzeichnet worden sind. Die Haltevorsprünge 15 halten nicht nur den Messerschlitten 6 zwanglos in seiner gewünschten Stellung am feststehenden Messer 3, sondern sie führen auch dazu, daß Kaulkräfte an den Führungsleisten 12 abgefangen und direkt über die Schraubverbindungen 14 in die vordere Körperplatte 1 abgeleitet werden. Die vordere Körperplatte 1 muß also massiv und den auftretenden Kräften entsprechend ausgebildet sein. Für die hintere Körperplatte 2 gilt dies beim dargestellten Ausführungsbeispiel jedoch nicht, da dort die eine besonders massive Ausgestaltung erfordernden Kaulkräfte nicht mehr auftreten.

Schließlich lassen die Figuren noch insoweit eine weitere bevorzugte Ausführungsform der Profilstahlschere erkennen, als nämlich die Führungsleisten 12 auf der von der vorderen Körperplatte 1 weg gerichteten Seite voneinander weg gerichtete Haltevorsprünge 16 für die hintere Körperplatte 2 aufweisen. Die Führungsleisten 12 dienen also hier selbst als Befestigungspunkte für die hintere Körperplatte 3 im besonders relevanten Bereich seitlich des Scherenmauls.

Der Vollständigkeit halber ist festzuhalten, daß die Führungsleisten 12 auch mittels Schraubverbindungen mit der vorderen Körperplatte 1 verbunden werden können, die von der Vorderseite der Körperplatte 1 ausgehen. Ebenso könnten die Führungsleisten 12 ausschließlich an der hinteren Körperplatte 2 durch Schraubverbindungen oder anderweitig befestigt sein, wenn man auf den zusätzlichen Effekt der Ableitung der Kaulkräfte in die vordere Körperplatte 1 verzichtet.

Fig. 2 macht im übrigen erkennbar, wie einfach sich ein Auswechseln des bewegbaren Messers 7, das entweder integraler Bestandteil des bewegbaren Messerschlittens 6 oder als gesondertes Bauteil an diesem befestigt ist, gestaltet. Nur eine der Schraubverbindungen 14, beispielsweise die Schraubverbindung 14 der oberen Führungsleiste 12, wird gelöst; diese Führungsleiste 12 wird nach hinten, also zur hinteren Körperplatte 2 hin herausgenommen. Da nach oben jetzt genügend Spielraum besteht, kann der Messerschlitten 6 gleichfalls nach hinten herausgenommen werden. Das feststehende Messer 3 in der vorderen Körperplatte 1 bleibt bei all diesen Handhabungen völlig unangetastet.

Sind die Führungsleisten 12 verschlissen oder bedürfen sie aus anderem Grunde einer Auswechslung, beispielsweise weil ein Material mit noch besseren Gleiteigenschaften entwickelt worden ist, so müssen lediglich die Schraubverbindungen 14 gelöst und die Führungsleisten 12 nach hinten herausgezogen und durch neue Führungsleisten 12 ersetzt werden.

**Patentansprüche**

1. Profilstahlschere mit einem Maschinenkörper mit einer vorderen Körperplatte und einer hinteren Körperplatte, mit einem an der vorderen Körperplatte angeordneten feststehenden Messer, mit einem im Zwischenraum zwischen den Körperplatten im wesentlichen vertikal bewegbar geführten Arbeitsschlitten und mit einem zwischen den Körperplatten in einem Winkel von vorzugsweise 45° zur Vertikalen geführte, durch den Arbeitsschlitten bewegbaren, in der Ebene des Arbeitsschlittens angeordneten Messerschlitten mit einem bewegbaren Messer, wobei die Führung des Messerschlittens und Umlenkung der im wesentlichen vertikal gerichteten Bewegung des Arbeitsschlittens in die in einem Winkel von vorzugsweise 45° zur Vertikalen gerichtete Bewegung des Messerschlittens über Gleit- und Führungsflächen erfolgt und wobei die Gleit- und Führungsflächen an gesonderten, an den Körperplatten abgestützten, sich von der vorderen Körperplatte bis zur hinteren Körperplatte über den Zwischenraum hinweg erstreckenden Führungsleisten, die mit der vorderen Körperplatte (1) fest verbunden sind, ausgebildet sind, dadurch gekennzeichnet, daß die vordere Körperplatte (1), angrenzend an das feststehende Messer (3), nach vorne geschlossene Aufnahmeausnehmungen (13) für die Führungsleisten (12) aufweist, daß die Führungsleisten (12) von der hinteren Körperplatte (2) her in die Aufnahmeausnehmungen (13) der vorderen Körperplatte (1) einsetzbar oder einlegbar sind und daß die Führungsleisten (12) mit Abstand vom feststehenden Messer (3) angeordnete, zu den Gleit- und Führungsflächen (11) parallele, aufeinander zu gerichtete Haltevorsprünge (15) für den Messerschlitten (6) aufweisen.

2. Profilstahlschere nach Anspruch 1, dadurch gekennzeichnet, daß die Aufnahmeausnehmungen (13) unmittelbar an das feststehende Messer (3) angrenzen.

3. Profilstahlschere nach Anspruch 1 oder 2, dadurch gekennzeichnet, daß die Führungsleisten (12) über Schraubverbindungen (14) mit der vorderen Körperplatte (1) verbunden sind.

4. Profilstahlschere nach einem der Ansprüche 1 bis 3, dadurch gekennzeichnet, daß die Führungsleisten (12) auf der von der vorderen Körperplatte (1) weg gerichteten Seite voneinander weg gerichtete Haltevorsprünge (16) für die hintere Körperplatte (2) aufweisen.

## Claims

1. A profile steel shear with a machine frame with a front frame plate and a rear frame plate, with a stationary blade located in the front frame plate, with a working slider guided with essentially vertical movement in the intervening gap between the frame plates and with a blade slider with a movable blade, located in the plane of the working slider and movable by the working slider between the frame plates at an angle of preferably 45° to the vertical, in which the guidance of the blade slider and the diversion of the essentially vertically directed movement of the working slider into the movement of the blade slider directed at an angle of preferably 45° to the vertical takes place via sliding and guidance surfaces and in which the sliding and guidance surfaces are formed on separate guidance strips, supported on the frame plates and rigidly connected to the front frame plate (1), and extending from the front frame plate to the rear frame plate across the intervening gap, characterized in that the front frame plate (1), bordering on the stationary blade (3), possesses mounting recesses (13) closed at the front for the guidance strips (12), that the guidance strips (12) can be inserted or inlaid in the mounting recesses (13) of the front frame plate (1) from the direction of the rear frame plate (2), and that the guidance strips (2) possess holding projections (15) for the blade slider (6), directed towards one another, located with clearance from the stationary blade (3), and parallel to the sliding and guidance surfaces (11).

2. A profile steel shear according to claim 1, characterized in that the mounting recesses (13) bound the stationary blade (3) directly.

3. A profile steel shear according to Claim 1 or 2, characterized in that the guidance strips (12) are connected to the front frame plate (1) by bolt connections (14).

4. A profile steel shear according to one of Claims 1 to 3, characterized in that the guidance strips (12) possess holding projections (13) for the rear frame plate (2), on the side directed away from the front frame plate (1), and facing away from one another.

## Revendications

1. Cisaille à acier profilé avec un bâti de machine composé d'une plaque antérieure de bâti et d'une plaque postérieure de bâti, une lame fixe sur la plaque antérieure de bâti, un coulisseau de travail mobile essentiellement verticalement dans l'écartement des plaques du bâti et un coulisseau avec une lame mobile disposé dans le plan du coulisseau de travail, déplaçable par l'intermédiaire du coulisseau de travail et logé entre les plaques du bâti dans un angle de 45° de préférence par rapport à la verticale où le guidage du coulisseau et le passage du mouvement essentiellement vertical du coulisseau de travail en un mouvement de 45° de préférence par rapport à la verticale du coulisseau s'effectue via des surfaces de guidage et de glissement et où les surfaces de guidage et de glissement se trouvent sur des réglettes de guidage séparées, appuyées sur les plaques du bâti et s'étendant de la plaque antérieure du bâti à la plaque postérieure du bâti en traversant l'écartement et qui sont fixées à demeure à la plaque antérieure du bâti (1) caractérisée en ce que la plaque antérieure du bâti (1) adjacente à la lame fixe (3) présente des logements en creux fermés vers l'avant (13) pour les réglettes de guidage (12), que les réglettes de guidage (12) peuvent s'insérer de la plaque postérieure du bâti (2) dans les logements en creux (13) de la plaque antérieure du bâti (1), et que les réglettes de guidage (12) présentent des saillies de fixation (15) pour le coulisseau (6) dirigées l'une vers l'autre, séparées de la lame fixe (3) et parallèles aux surfaces de guidage et de glissement (11).

2. Cisaille à acier profilé selon la revendication 1, caractérisée en ce que les logements en creux (13) sont directement adjacents à la lame fixe (3).

3. Cisaille à acier profilé selon la revendication 1 ou 2, caractérisée en ce que les réglettes de guidage (12) sont fixées à la plaque antérieure du bâti (1) par des raccords à vis (14).

4. Cisaille à acier profilé selon une des revendications 1 à 3, caractérisée en ce que les réglettes de guidage (12) présentent des saillies de fixation divergentes (16) pour la plaque postérieure du bâti (2) sur la face orientée dans le sens opposé de la plaque antérieure du bâti (1).

Fig.1

Fig.2